# EUROPEAN PATENT APPLICATION

(11) **EP 0 529 707 A1**
(43) Date of publication of application: **03.03.1993**
(21) Application number: 92202387.4
(22) Date of filing: 01.08.1992
(51) Int. Cl.: B29C 39/20, B29C 39/14, B31D 1/02

(54) **Method and installation for the production of continuous self-adhesive webs**

(30) Priority: 02.08.1991 BE 9100719
(71) Applicant: Bosman, Herman Rudolph, Jr., B-3530 Houthalen (BE); Bosman, Herman Rudolph, Sr., B-3530 Houthalen (BE)
(72) Inventor: Bosman, Herman Rudolph, Jr., B-3530 Houthalen (BE); Bosman, Herman Rudolph, Sr., B-3530 Houthalen (BE)
(74) Representative: Dopchie, Jean-Marc (BE)

(57) **Abstract**

A method for the production, in a continuous process, of continuous webs of self-adhesive sheet by casting a base product processed to form a fluid paste, characterised in that, successively, a layer of adhesive is applied to a silicon-coated paper layer (21), said adhesive layer is allowed to dry, the fluid paste is then cast directly onto said dried adhesive layer and, finally, said paste layer is also allowed to dry, as well as an installation for the production of self-adhesive sheet according to the method according to the invention, in which installation an adhesive-dispensing device (25), a drying installation (26) for the adhesive, a casting device (27) and if necessary a drying installation (30) for the paste - if drying installation (26) is not used for this purpose - are arranged in this order downstream of one another along the path - determined by means (22), (23), (24), (28) and (31) for guiding a long band or web of paper (21) through the installation - for one band or web of paper (21).

## Description

The invention relates to a new method and an installation for the production, in a continuous process, of continuous webs of self-adhesive sheet, as are widely used for the production of self-adhesive texts/films. Products of this type are used, inter alia, in the advertising industry, where they are used, for example, for cutting letters and symbols for trade names, advertising slogans and the like on vehicles or walls - both outdoors and indoors -, or for any information in the form of symbols or messages, on walls, windows, doors and the like, or for use as "stickers" with their many known applications. These products usually consist of a thin plastic sheet which, in accordance with its intended purpose, can eventually be printed on the front and provided with a layer of adhesive on the back.

A cover paper is applied to this adhesive layer, over the entire surface thereof. In order now to apply the sheet and/or texts to a substrate or the like it suffices to remove the cover paper from the back and to stick the film with the back provided with an adhesive layer against a background.

The invention relates more particularly to a new method and installation for the production, in a continuous process, of continuous webs of self-adhesive sheet, this sheet being formed by casting and uniformly spreading a paste which has been rendered fluid, which paste may or may not be a plastic, on a substrate, characterised in that the paste rendered fluid is cast directly onto the adhesive layer of the cover paper, as a result of which, on the one hand, a separate casting support - which is needed in the methods known to date for casting self-adhesive sheet - is superfluous and as a result of which, on the other hand, the complete product can be produced in a single operation, with appreciable savings in material, energy and labour costs and a waste-free production as the most striking advantages.

Various production methods are known for the production of webs of this type. The four most important methods are described briefly below, indicating the respective disadvantages of the method and/or the product obtained.

The oldest known method consists in calendering the sheet. A strand of vinyl synthetic resin monomer or polymer (for example PVC) is melted and rolled between calenders in order to obtain a film having a thickness of, in general, 80 to 100 micron. The films produced from a vinyl synthetic resin monomer by this method are less suitable for long-term use outdoors, because of their tendency to shrink.

The risk of shrinkage is less when a vinyl synthetic resin polymer is used, but these products leave something to be desired for use on uneven or corrugated surfaces. In addition, this production method does not meet the requirements with regard to the environment, which are becoming increasingly stringent, and improvement of the method in order to comply with these requirements involves high cost. Consequently, this method is of no great interest, either from the standpoint of the quality of the product, or from the economic standpoint.

The second known method consists in blowing the sheet. The most commonly used plastic here is polyethylene. Both the raw material and the production method are environmentally friendly. The disadvantage of this method lies in the fact that the surface of the sheet produced in this way does not satisfy the stringent demands laid down by the advertising industry. Specifically, the major disadvantage is that the film is difficult to provide with adhesive and to print. This disadvantage can partially be overcome by subjecting the surface of the sheet to a pretreatment. However, this again entails higher costs and, moreover, this pretreatment pollutes the environment.

A third method consists in the extrusion of the sheet with the aid of an extruder, which is provided with a so-called sheet die. This is a die which has a slit over the entire width on the outlet side. The plastic paste is pressed into this die and leaves the die along the slit opening. The dimensions on the slit opening are adjustable, as a result of which the thickness of the sheet can be determined. The plastic most often used for this method is polyester. The sheet which is produced according to this production method also requires a pretreatment for providing with adhesive and printing, which entails higher costs and makes the method uninteresting from the economic standpoint. An additional disadvantage of the product obtained by this method is its inadequate resistance to weathering.

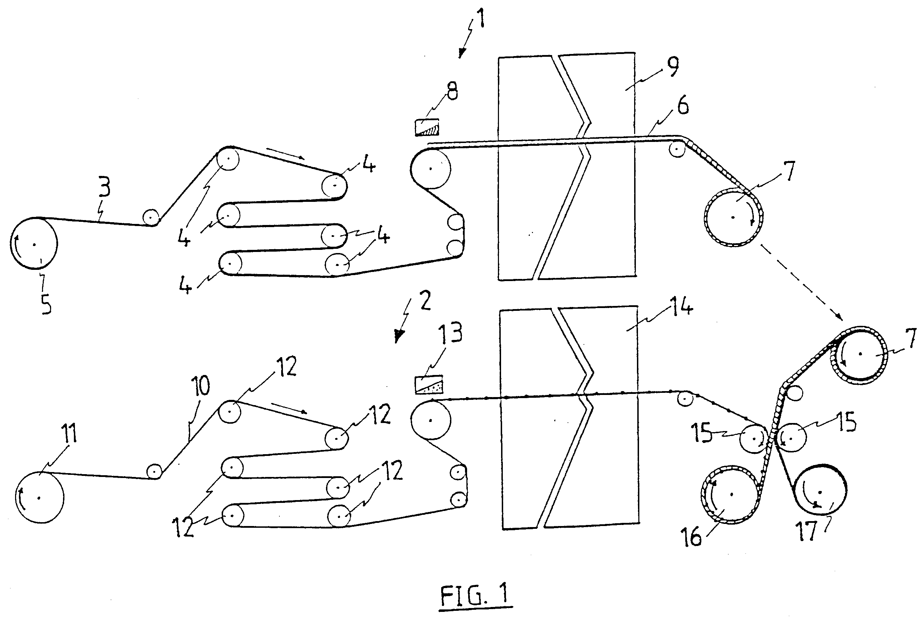

The fourth method which belongs to the known prior art consists in casting the sheet. Chemical solvents are added to a vinyl synthetic resin (for example PVC) in order to render this fluid. The installation used for this production method is shown diagrammatically in Figure 1.

This installation provides, in a first operation - designated installation (1) -, for casting the sheet (6) on a casting support (3) and, in a second operation - designated installation (2) - for dispensing adhesive on the cover paper (10) and combining this cover paper (10) with the sheet (6). A casting support (3) is guided over rolls (4) through the installation (1) which is used for casting the sheet (6). This casting support (3) is unrolled from a roll (5) at the front of the installation (1) and wound on a roll (7) at the rear of the installation (1). This casting support (3) consists of a long strip of heavy paper provided with a special release layer. This special support layer is needed because the sheet (6) is cast onto this casting support (3). The surface layer thus, on the one hand, determines the appearance of the surface of the front of the sheet and, on the other hand, makes it easy for this sheet (6) to be removed from the casting support (3).

The casting support (3) enters the installation (1) in the region of a casting device (8), from which a layer of paste, which has been rendered fluid and may or may not consist of plastic, is cast onto the casting support (3) and is spread out by means of, for example, a doctor blade.

The casting support (3) with the paste on top of it is then passed through a drying tunnel (9), where the paste is dried. When it leaves the drying tunnel (9) the paste is dry and the sheet is formed. The casting support (3) with the sheet (6) thereon is rewound (7).

In the installation (2) a silicon-coated web of paper (10) - the cover paper - is provided with adhesive, dried and pressed against the sheet (6) cast in installation (1).

The silicon-coated paper (10) is at the front of the installation (2) on a roll (11), from which the paper (10) is unwound and guided over rolls (12) through the installation (2). In the region of an adhesive-dispensing device (13), a layer of adhesive is applied to the paper (10). The paper (10) is further guided through a drying tunnel (14), where the adhesive layer is dried.

The roll (7) carrying the casting support (3) and the sheet (6) is installed at the end of the installation. The casting support (3), with sheet (6) thereon, which is unwound from roll (7), and also the adhesive-coated silicon-coated paper (10) which issues from the drying tunnel (14), are passed between two rollers (15). The rollers (15) press the sheet (6) with its upper side against the paper (10) carrying the layer of adhesive applied thereto. The sheet (6) sticks to the paper (10) and is separated from the casting support (3) downstream of the rollers (15). Two rolls (16) and (17) are installed downstream of the rollers (15). The end product - the sheet (6) on the adhesive-coated paper (10) - is wound on one roll (16). The casting support (3) is wound on the other roll (17).

The casting support (3) can then be reused in the installation (1) (roll (17) becomes roll (5)). However, this can be done only a limited number of times because the quality of the top layer - which is important for the appearance of the sheet (6) - rapidly deteriorates. Moreover, the casting support (3) must be checked and cleaned after each use. Because of the heavy release layer with which this casting support (3) is covered, recycling thereof is not possible. This casting support (3), which is very expensive, can consequently not be used for anything else after a limited number of production cycles and must be regarded as waste.

The method and installation described above have significant disadvantages: high labour, equipment and energy costs because of the existence of two operations, high labour costs because of the need to check and clean the casting support (3), high production costs because of the limited life of an expensive casting support which cannot be recycled, and a waste problem giving rise to environmental pollution. Another disadvantage also lies in the fact that, because of the very smooth release layer surface of the casting support (3), it is not possible to use water-based emulsions (so-called dispersion films) for casting the sheet (6). The reason is that the smooth surface of the casting support (3) is water-repellant.

On the other hand, the production of sheet by casting yields an exceptionally stable and flexible end product. This product is consequently outstandingly suitable for (outdoor) use in poor conditions (wide variations in humidity and temperature, uneven surfaces) since it has the longest life, compared with the products obtained by other production methods.

The aim of the invention is to provide an improved production method and installation for the production of continuous webs of self-adhesive sheet, by casting said sheet (since this production method yields the best possible end product), with which method and installation the above-described disadvantages of the existing method and installation are overcome. The aim of the invention is, consequently, on the one hand to provide a method and installation with which, on the one hand, the production process can be allowed to proceed in a single operation and with which, on the other hand, the use of a casting support (3), or any other similar means, is superfluous.

One subject of the invention is a method for the production of continuous webs of self-adhesive sheet by casting said sheet, characterised in that, successively, a layer of adhesive is applied to a silicon-coated paper layer, this adhesive layer is allowed to dry, the paste is then cast directly onto this adhesive layer and this paste layer is then also allowed to dry. The visible side of the sheet formed in this way is subsequently optionally subjected to a finishing treatment, in order to comply with the quality requirements in respect of the surface, or in order to apply specific textures and/or patterns to this surface by means of textured rollers.

One advantage of this method lies in the fact that a casting support (3) has become superfluous, which makes the production method less expensive, compared with the known method, because the labour, equipment and production costs are lower, and more environmentally friendly because of the absence of waste. Another advantage of this method lies in the possibility of using water-based emulsions for casting the sheet, which was not possible according to the known production method.

Another subject of the invention is an installation for carrying out the abovementioned method according to the invention. This installation has an unrolling device at the front, from which a layer of silicon-coated cover paper is unrolled, guided over a number of rolls through a machine and rewound by a rewind device at the end of the machine.

The path travelled by the silicon-coated paper is such that it is fed successively past an adhesive-dispensing device, a first drying tunnel or oven, a casting device for the sheet, optionally a polished smoothing roller, and a second drying tunnel or oven, in order, in accordance with the method according to the invention, respectively to coat the paper with a layer of adhesive, to dry this adhesive layer, to cast a paste on this adhesive layer, optionally to finish the visible upper side thereof, and finally to dry this paste. Downstream of the oven an additional finishing device can optionally be installed in order further to finish the sheet, for example by applying specific textures and/or patterns thereon by means of after-rolling.

The advantage of this installation according to the invention lies in the fact that the entire production process is carried out in a single operation, which results in an appreciable saving in labour and energy costs.

Further characteristics and advantages of the method and of the installation according to the invention are illustrated with the aid of the following more detailed description of a preferred embodiment of an installation according to the invention, for carrying out the method according to the invention. This description is illustrated with reference to the appended figure.

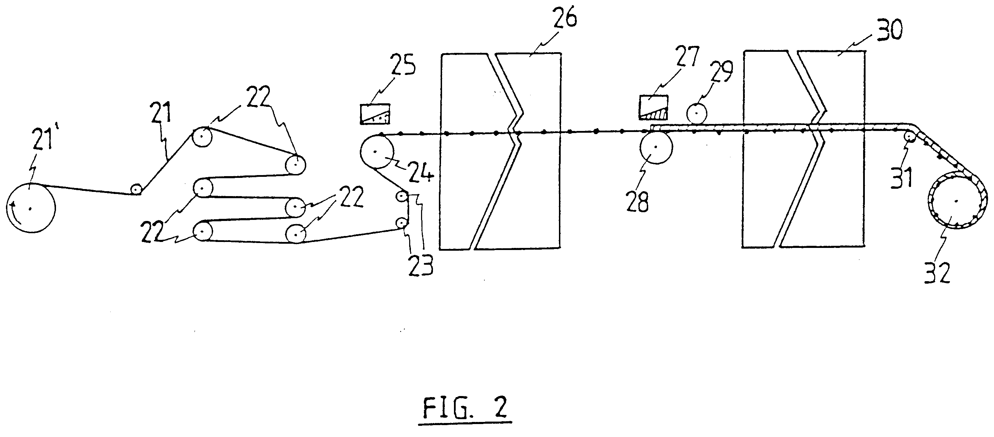

Figure 2 shows, diagrammatically, the installation for casting self-adhesive films according to the invention and in accordance with the method according to the invention.

The installation according to the invention has, at the front, a roll (21') carrying and endless web of silicon-coated paper (21). In addition, a number of tensioning and supporting rolls (22), over which the web of paper (21) is passed, are installed in the installation. These rolls (22) are installed parallel to the roll (21') carrying paper (21), at various heights above and alongside one another, in such a way that the rolls (22) systematically carry the paper web (21) along a zig-zag path - to a lower level. The paper web can, of course, also be brought to a lower level via a different path - using different arrangements for the rolls (22). The paper web (21), which is in contact with the underside of the lowest roll (22) is fed, staying more or less horizontal, further towards the rear of the installation.

Further inside the installation, guide rolls (23) - parallel to the rolls (22) - are installed above one another, the level of the lowest roll (23) being approximately the same as that of the lowest roll (22). A larger guide roll (24) is installed above said roll (23), a little further towards the front of the machine. The paper web (21) is fed along the rear of the two rolls (23) and upwards, over the front and top of the roll (24), in order then to extend essentially horizontally. The rolls (23) are installed relative to the roll (24) in such a way that the paper web (21) comes into contact with the guide roll (24) over an angle of about 180°C. The rolls (22), (23) and (24) are all installed parallel to the roll (21') carrying paper (21).

The adhesive-dispensing device (25), which extends over the entire width of the paper web (21), is located above the roll (24). The first oven (26) for drying the adhesive layer is located more towards the back. This oven (26) is constructed and installed in such a way that the paper web (21) which extends horizontally from the top of roll (24) can extend and move through the oven (26).

The casting device (27) is provided further inside the installation. This device is located just above the height of the paper web (21) extending horizontally, and extends over the entire width of the paper web (21). A support roll (28) is installed below the casting device (27), at the same height as the roll (24) and parallel thereto.

A polished smoothing roller (29), for finishing the visible upper side of the cast film, is installed further inside the installation, at an adjustable height above the paper web (21) which is fed past it horizontally, said height corresponding to the desired thickness of the film. This smoothing roller can be set stationary or rotating in the same or opposite direction of rotation, the speed of rotation being adjustable, depending on the nature of the paste to the processed.

The second oven (30) for drying the paste which has been applied from the casting device (27) onto the adhesive-coated paper web (21) is located further inside the installation, according to the invention. This oven (30), like the oven (26), is constructed and installed in such a way that the paper web (21) which extends horizontally over the top of the rolls (24) and (28) can extend and move forward through the oven (30).

Downstream of this oven (30), a guide roll (31) is installed at the same height as, and parallel to, the rolls (24) and (28). A roll (32) is then installed further inside the installation on the rolling device. This roll (32) is parallel to all other rolls and lower than roll (31). The paper web (21), provided with an adhesive layer and the cast sheet, is guided over the top of roll (31), obliquely downwards in the direction of roll (32), where the end product is rewound. If appropriate, the visible side of the sheet formed is also subjected to an additional finishing operation, in order to meet the intended purpose for that visible surface, or in order to apply specific textures and/or patterns to this surface.

By driving one or more of the said rolls in the installation, the paper web (21) is unwound from the roll (21'), fed through the installation and rewound on the roll (31). Under way the treatments determined by the method according to the invention are carried out successively, so that the end product can be rewound.

The path of the paper web (21) which is described here and is determined by the arrangement of the rolls (22), (23), (24), (28) and (31) is, of course, only an example. Other arrangements of these rolls or of a smaller or greater number of rolls make no difference with regard to the principle of the installation according to the invention. Specifically, the basic principle consists in bringing a band or web of the material which is used as cover paper for the sheet successively within the range of an adhesive-dispensing device, a drying installation, a casting device and a second drying installation, said material being fed systematically from a roll (21') on an unrolling device through the installation in order finally to be rewound as finished product (32) on a rewinding device.

In the region of the casting device (27) a device (not shown) is provided in order to spread out the cast paste uniformly over the paper web (21) which is fed past. This device can optionally also consist of a roll of adjustable height.

Furthermore, it should also be pointed out that in a variant embodiment of the installation according to the invention, the various components (29), (31) and (32) of the installation which are located downstream of the casting device (27) can be installed in such a way that the web or band of paper (21) makes an angle of 180° downstream of the casting device (27) and is fed back through the oven or drying tunnel (26), in such a way that this oven or drying tunnel (26) is used both to dry the adhesive and to dry the paste, and the oven or drying tunnel (30) becomes superfluous.

Specifically, the method for casting self-adhesive sheet according to the invention is characterised in that the following operations are carried out successively:
- application of a layer of adhesive to the silicon-coated paper layer (10), or similar cover material for the back of the sheet
- drying of this adhesive layer
- casting a paste, which has been rendered fluid, onto the dried adhesive layer
- finishing this layer with the aid of a polished smoothing roller
- drying the paste layer
- optionally after-rolling in order to obtain textures and/or patterns in the sheet.

The types of adhesive used can be either water-based or solvent-based. The casting pastes, which may or may not be based on plastic, are obtained by adding solvents, or are prepared as water-based pastes. The base product for these pastes is, for example, a vinyl synthetic resin, such as PVC.

The advantages of the installation according to the invention lie in the fact that the endless web of self-adhesive sheet is produced in a single operation, which saves energy, material and labour costs. The advantages of the method according to the invention lie in the fact that the expensive casting support (3) of limited life is no longer needed, as a result of which the production costs fall, as a result of which the labour costs fall (inspection and cleaning of this casting support no longer required), as a result of which the production no longer produces any waste (the casting support not being recyclable), and as a result of which water-based emulsions can be used for casting the sheet, so that, inter alia, dispersion films can be produced.

## Claims

1. Method for the production, in a continuous process, of continuous webs of self-adhesive sheet, which sheet has a layer of adhesive on one side and is provided with a covering and easily detachable cover layer on this adhesive layer, by casting and uniformly spreading a base product, which has been processed to give a fluid paste, on a substrate, and allowing said product to dry, characterised in that the end product is obtained by, successively, applying a layer of adhesive to a cover layer (21), allowing this adhesive layer to dry, casting and uniformly spreading the base product on said dried adhesive layer and allowing the paste layer to dry.

2. Method for the production, in a continuous process, of continuous webs of self-adhesive sheet, according to Claim 1, characterised in that the visible surface layer of the paste layer is finished, after casting, using a polished smoothing roll.

3. Method for the production of endless webs of self-adhesive sheet, according to Claims 1 or 2, characterised in that, after drying the paste, the sheet is processed in order to obtain specific textures and/or patterns in said sheet.

4. Method for the production of endless webs of self-adhesive sheet, according to one or more of the preceding claims, characterised in that the base product is processed to form a paste by adding water.

5. Method for the production of endless webs of self-adhesive sheet, according to one or more of the preceding claims, characterised in that the base product is a plastic product.

6. Method for the production of endless webs of self-adhesive sheet, according to one or more of the preceding claims, characterised in that the base product is a vinyl synthetic resin.

7. Automated installation for the production of endless webs of self-adhesive sheet by casting a product processed to form a paste, consisting of a casting device (27) and a drying installation (30) for the paste, an adhesive-dispensing device (25) and a drying installation (26) for the adhesive, and means for systematically bringing the complete length of long bands or webs inside the range of these components (25), (26), (27) and (30) of the installation, characterised in that the adhesive-dispensing device (25), the drying installation for the adhesive (26), the casting device (27) and the drying installation (30) for the paste are installed in this order downstream of one another along a path - determined by the means (22), (23), (24), (28) and (31) for feeding a long band or web through the installation - for a long band or web (21).

8. Automated installation for the production of endless webs of self-adhesive sheet, according to Claim 7, characterised in that the means (22), (23), (24), (28) and (31) for feeding a long web or band (21) through the installation are rolls which are provided in order to guide one long web or band (21) of the material which is used as cover paper through the installation and in that, to this end, at least one of said means (22), (23), (24), (28) and (31) is driven.

9. Automated installation for the production of endless webs of self-adhesive sheet, according to Claim 7 or 8, characterised in that an unrolling device is installed upstream of the adhesive-dispensing device, from which unrolling device a roll (21') can be unrolled, in that the band or web (21) of the material which is to be used as cover paper is located on said roll (21'), in that tensioning and supporting rolls (22), (23), (24), (28) and (31) are located further inside the installation, which rolls, when the band or web (21) is passed thereover, bring said band or web (21) successively within the range of the adhesive-dispensing device (25), the drying installation (26) for the adhesive, the casting device (27) and the drying installation (30) for the paste, and in that downstream of the drying installation (30) for the paste there is a rolling-up device, on which a roll (32) is located and by means of which the finished product - a sheet on an adhesive-coated cover paper - can be rolled up.

10. Automated installation for the production of endless webs of self-adhesive sheet, according to one or more of Claims 7 to 9, characterised in that an installation (29) for finishing the visible upper side of the cast sheet is located downstream of the casting device (27) and upstream of the drying installation (30) for the paste, above the band or web (21) carrying the paste layer, which is moved past.

11. Automated installation for the production of continuous webs of self-adhesive sheet, according to Claim 10, characterised in that the installation for finishing the visible upper side of the cast film is a polished smoothing roller (29), the height of which above the band or web (21) which is moved past is adjustable.

12. Automated installation for the production of continuous webs of self-adhesive sheet according to one or more of Claims 7 to 11, characterised in that a device for uniformly spreading the paste layer is provided in the region of the casting device (27).

13. Automated device for the production of continuous webs of self-adhesive sheet, according to Claim 12, characterised in that the device for uniformly spreading the paste layer is a doctor blade or a roller.

14. Automated installation for the production of webs of self-adhesive sheet, according to one or more of Claims 7 to 13, characterised in that an installation for after-rolling the sheet, in order to obtain textures and/or patterns in said sheet, is provided downstream of the drying installation (30) for the paste.

15. Automated installation for the production of continuous webs of self-adhesive sheet, according to one or more of Claims 7 to 14, characterised in that the means (22), (23), (24) (28) and (31) for feeding the long band or web (21) through the installation are installed in such a way that said band or web describes a bend of 180° downstream of the casting device (27) for the paste and is fed back through the first drying installation (26) for the adhesive, so that the same drying installation (26) is used for drying the paste, and the second drying installation (30) is no longer provided.

16. Automated installation for the production of continuous webs of self-adhesive sheet, according to one or more of Claims 7 to 15, characterised in that the method for the production of endless webs of self-adhesive sheet, according to one or more of Claims 1 to 6, is automatically used by said installation.
